# FASCICULE DE BREVET EUROPEEN

(11) **EP 3 137 742 B1**
(45) Date de publication et mention de la délivrance du brevet: **21.03.2018**
(21) Numéro de dépôt: 15725820.3
(22) Date de dépôt: 28.04.2015
(51) Int. Cl.: F01D 25/16, F02C 7/32, F02C 7/36, F02K 3/06, F02C 7/06

(54) **ENSEMBLE MODULAIRE POUR UNE TURBOMACHINE**
MODULARE ANORDNUNG FÜR EINEN TURBINENMOTOR
MODULAR ASSEMBLY FOR A TURBINE ENGINE

(30) Priorité: 29.04.2014 FR 1453889; 29.04.2014 FR 1453890; 03.10.2014 FR 1459530
(43) Date de publication de la demande: 08.03.2017
(73) Titulaire: Safran Aircraft Engines, 75015 Paris (FR)
(72) Inventeur: CURLIER, Augustin, 77550 Moissy-Cramayel Cedex (FR); LEMARCHAND, Kevin, Morgane, 77550 Moissy-Cramayel Cedex (FR); NOWAKOWSKI, Nathalie, 77550 Moissy-Cramayel Cedex (FR); VINCENT, Thomas, Alain, Christian, 77550 Moissy-Cramayel Cedex (FR)
(74) Mandataire: Gevers & Orès
(86) Numéro de dépôt international: PCT/FR2015/051158
(87) Numéro de publication internationale: WO 2015/166187

(56) Documents cités:
- EP-A2- 1 980 732
- FR-A1- 2 882 096
- GB-A- 2 088 015
- US-A- 2 932 443

## Description

### DOMAINE TECHNIQUE

La présente invention concerne un ensemble modulaire pour une turbomachine, en particulier d'aéronef.

### ETAT DE L'ART

Une turbomachine comprend un moteur qui, dans le cas d'un turboréacteur à double corps, comporte deux arbres, respectivement basse pression (BP) et haute pression (HP), qui s'étendent le long de l'axe longitudinal de la turbomachine. Les arbres BP et HP sont en général tubulaires et montés l'un à l'intérieur de l'autre.

On a déjà proposé d'entraîner un équipement de la turbomachine au moyen d'un arbre de renvoi sensiblement radial (par rapport à l'axe longitudinal de la turbomachine). C'est notamment le cas lorsque l'équipement est monté dans une nacelle qui entoure le moteur de la turbomachine. L'arbre de renvoi transmet une puissance mécanique entre un arbre de la turbomachine et un équipement tel qu'une boîte d'accessoires, aussi appelée AGB qui est l'acronyme de l'expression anglaise *Accessory Gear Box.* Cet arbre de renvoi est entraîné en rotation par l'intermédiaire d'un jeu de pignons ou roues coniques. Une roue conique de renvoi est solidaire en rotation de l'arbre HP et est engrainée avec une seconde roue ou un pignon conique qui est monté sur une extrémité radialement interne de l'arbre de renvoi.

La demande EP-A1-1 813 792 de la demanderesse décrit des pignons ou roues coniques de ce type.

Pour entraîner un autre équipement de la turbomachine, tel qu'un générateur électrique, on a déjà imaginé de prélever de la puissance du moteur au moyen d'un autre arbre de renvoi.

Des études ont permis de démontrer qu'un prélèvement de puissance additionnel sur l'arbre HP réduit la marge au pompage du compresseur HP et pourrait être trop contraignant d'un point de vue performance et opérabilité. Le prélèvement de puissance devrait donc être réalisé sur l'arbre BP au moyen d'un jeu de pignons ou roues coniques supplémentaire.

De façon connue, l'arbre radial qui sert à prélever de la puissance sur l'arbre HP, s'étend à l'intérieur d'un bras creux en forme dièdre sensiblement radial d'un carter intermédiaire de la turbomachine. Le carter intermédiaire est disposé entre des compresseurs BP et HP de la turbomachine, et ses bras s'étendent dans la veine d'écoulement d'air entre ces compresseurs.

L'arbre radial qui servirait à prélever de la puissance sur l'arbre BP, devrait également s'étendre à l'intérieur d'un bras creux du carter intermédiaire et pourrait être situé avec le premier arbre radial sensiblement dans un même plan transversal.

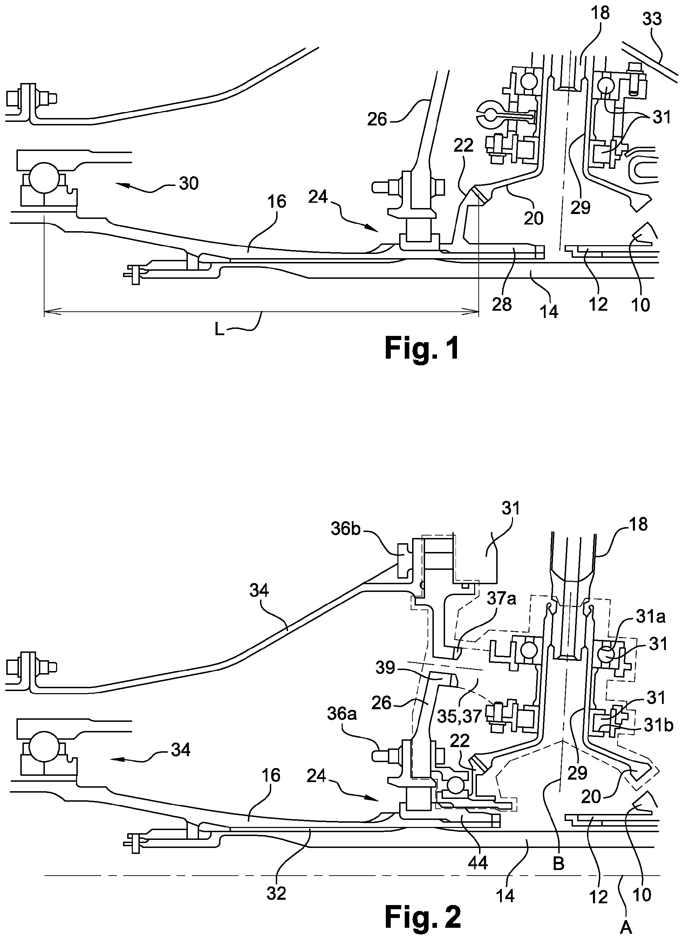

Comme cela est visible en figure 1, une roue conique de renvoi 10 est montée au voisinage d'une extrémité amont de l'arbre HP 12. Comme décrit dans ce qui précède, cette roue 10 est engrenée avec un pignon conique d'un premier arbre de renvoi qui n'est pas visible en figure 1.

L'arbre HP 12 entoure l'arbre BP 14 qui se prolonge vers l'amont au-delà de l'arbre HP 12. La partie d'extrémité amont de l'arbre BP 14 est entourée par une partie d'extrémité aval d'un arbre de soufflante 16.

Le second arbre de renvoi 18 porte un pignon conique 20 qui est engrené avec une roue conique de renvoi 22 montée sur l'arbre de soufflante 16. La roue de renvoi 22 est entraînée en rotation par l'arbre BP 14 par l'intermédiaire de l'arbre de soufflante 16.

Les arbres de la turbomachine sont centrés et guidés en rotation au moyen de paliers à roulement. La roue de renvoi 22 est ici montée en aval d'un palier à rouleaux 24 dont la bague externe est fixée à un support de palier 26 fixé à un stator 33 de la turbomachine. La bague interne du palier 24 est montée sur l'arbre de soufflante 16 et prend appui axialement par son extrémité amont sur un épaulement annulaire de ce arbre. Un écrou 28 est vissé sur l'extrémité aval de l'arbre de soufflante 16 et prend appui axialement sur la roue de renvoi 22 qui prend appui axialement sur la bague interne du palier 24 pour la solliciter contre l'épaulement précité de l'arbre 16.

Le pignon 20 comprend une portion cylindrique 29 qui est montée sur l'extrémité radialement interne de l'arbre de renvoi 18 et qui est guidé en rotation par deux paliers à roulement 31 coaxiaux. Les bagues internes de ces paliers 31 sont montées sur cette portion 29 et ses bagues externes sont portées par un organe fixé au stator de la turbomachine.

Cette architecture présente des inconvénients liés au montage et à la qualité de la transmission entre l'arbre BP 14 et l'arbre de renvoi 18.

Lors du montage, les différents modules de la turbomachine sont en général assemblés par engagement axial d'un module dans ou sur un autre module. Ainsi, le module de soufflante est assemblé par engagement axial de l'arbre de soufflante 16 sur l'arbre BP 14, jusqu'à engrènement de la roue conique de renvoi 22 avec le pignon de l'arbre de renvoi 18. Toutefois, compte tenu de la configuration et des diamètres précités, ce montage est complexe et peut conduire à un endommagement des dentures du pignon 20 et de la roue 22.

Toutefois, le support de palier 26, la roue de renvoi 22, le pignon 20, l'organe de support des paliers 31, etc., ne forment pas un module de turbomachine mais sont au contraire fixés et montés indépendamment les uns des autres. Au contraire, un module ou ensemble modulaire pour une turbomachine doit s'entendre dans la présente demande comme étant un ensemble de pièces qui coopèrent entre elles de façon à pouvoir être monter d'un bloc dans la turbomachine. Autrement dit, ce module ou ensemble modulaire peut être assemblé préalablement à son montage dans la turbomachine.

Enfin, la référence de position axiale de l'arbre de soufflante 16 est située au niveau d'un palier de butée 30 qui est située en amont et très éloignée de la zone d'engrènement du pignon et de la roue de renvoi 22. Du fait des déformations mécaniques, des dilatations thermiques, et des tolérances de fabrication et d'assemblage, les positions relatives du pignon 20 et de la roue 22 ne sont pas maîtrisées. La qualité du contact entre les dentures du pignon 20 et de la roue 22 et la durée de vie des dents ne sont donc plus assurées.

Bien que cela ne soit pas visible en figure 1, l'engrènement pour le prélèvement de puissance sur le corps HP est situé à proximité d'un palier de butée qui est situé directement en aval de la roue de renvoi 10, ce qui contribue à la qualité de la transmission (faibles débattements axiaux et radiaux).

L'art antérieur comprend également les documents GB-A-2 088 015 et EP-A2-1 980 732.

La présente invention propose une solution simple, efficace et économique à au moins une partie des problèmes précités.

### EXPOSE DE L'INVENTION

L'invention propose à cet effet une turbomachine comprenant un ensemble modulaire, un arbre de soufflante et des paliers de guidage de l'arbre de soufflante, l'ensemble modulaire comportant un support annulaire de paliers, ledit support annulaire comprenant des moyens de liaison à au moins un premier palier à roulement monté autour dudit arbre de soufflante, caractérisé en ce que ledit support annulaire comprend des moyens de liaison à au moins un second palier à roulement configuré pour être monté autour d'un second arbre de la turbomachine non parallèle audit premier arbre, et en ce que ledit support annulaire comprend des moyens de liaison à un carter intermédiaire de la turbomachine.

L'invention permet notamment de simplifier le montage de la turbomachine dont le montage par module ou en bloc est autorisé.

La turbomachine selon l'invention peut comprendre une ou plusieurs des caractéristiques suivantes:
- ledit support de paliers comprend des moyens de liaison à un troisième palier à roulement configuré pour être monté autour dudit second arbre de la turbomachine,
- ledit support de paliers comprend des moyens de liaison à un quatrième palier à roulement configuré pour être monté autour dudit premier arbre,
- lesdits premier et quatrième paliers sont reliés à la périphérie interne du support de palier,
- ledit quatrième palier comporte une bague interne montée autour d'un manchon sensiblement cylindrique autour duquel est également montée une roue conique de renvoi qui est configurée pour être engrenée avec un pignon conique une portion cylindrique entouré par ledit second palier, et éventuellement ledit troisième palier, et configurée pour être montée sur ou pour former une extrémité longitudinale dudit second arbre,
- la roue conique est serrée axialement contre ladite bague interne au moyen d'un écrou vissé sur ledit manchon,
- ledit premier palier une bague interne comportant un prolongement cylindrique autour duquel est monté ledit manchon qui comprend des cannelures internes complémentaires de cannelures externes dudit prolongement,
- ladite roue de renvoi s'étend sensiblement dans un plan transversal à un axe de révolution du support de paliers, qui est sensiblement parallèle audit support de paliers et/ou qui passe sensiblement par lesdits moyens de liaison audit second palier,
- le support de palier est sensiblement plan ou de forme générale tronconique,
- ledit prolongement cylindrique définit un espace annulaire autour de l'arbre de soufflante, qui est configuré pour recevoir un écrou,
- la bague interne dudit premier palier est intercalée axialement entre un rebord annulaire externe du manchon et ladite roue,
- l'un desdits deux paliers comporte une bague interne montée autour d'un manchon sensiblement cylindrique comprenant des cannelures internes, et en ce que l'autre desdits deux paliers comprend une bague interne comportant un prolongement cylindrique qui est engagé dans ledit manchon et qui comprend des cannelures externes complémentaires de celles dudit prolongement,
- ledit support de paliers comprend des moyens de liaison à deux paliers à roulement configurés pour être montés autour dudit second arbre de la turbomachine,
- lesdits deux paliers sont reliés à la périphérie interne du support de palier,
- une roue conique de renvoi est montée autour dudit manchon et est configurée pour être engrenée avec un pignon conique une portion cylindrique entouré par ledit au moins un palier, et configurée pour être montée sur ou pour former une extrémité longitudinale dudit second arbre,
- ladite roue de renvoi s'étend sensiblement dans un plan transversal à un axe de révolution du support de paliers, qui est sensiblement parallèle audit support de paliers et/ou qui passe sensiblement par lesdits moyens de liaison audit au moins un palier,
- le support de palier est sensiblement plan ou de forme générale tronconique,
- ledit prolongement cylindrique définit un espace annulaire autour de l'arbre de soufflante, qui est configuré pour recevoir un écrou,
- la bague interne dudit premier palier est intercalée axialement entre un rebord annulaire externe du manchon et ladite roue,
- chacun desdits deux paliers comporte une bague externe formée d'une seule pièce avec une bride annulaire de fixation audit support de palier,
- la bride de la bague externe de l'un des paliers est appliquée sur une face radiale dudit support de palier, et la bride de la bague externe de l'autre des paliers est appliquée sur une face radiale opposée dudit support de palier,
- le prolongement de la bague interne du palier s'étend axialement du côté opposé au côté du support de palier sur lequel est fixée la bride de sa bague externe,
- les brides comprennent des orifices de passage de vis de fixation, qui sont alignés ensemble et avec des orifices dudit support de palier, et
- le palier dont la bague interne est montée sur le manchon est un palier à billes, et le palier dont la bague interne comprend un prolongement est un palier à rouleaux.

La turbomachine peut comprendre un moteur comprenant deux corps, respectivement basse pression et haute pression, s'étendant le long de l'axe longitudinal de la turbomachine, le corps basse pression comportant un compresseur basse pression et une turbine basse pression dont les rotors sont reliés à un arbre basse pression qui entraîne en rotation ledit arbre de soufflante, le corps haute pression comportant un compresseur haute pression et une turbine haute pression dont les rotors sont reliés à un arbre haute pression, la turbomachine comportant en outre, entre les compresseurs basse pression et haute pression, un carter intermédiaire relié audit support annulaire, et dans laquelle le carter intermédiaire comprend des moyens de fixation amovible à un second support annulaire de palier(s) de guidage dudit arbre haute pression.

Ledit second arbre est de préférence un arbre de prélèvement de puissance. Ledit arbre haute pression peut comprendre des moyens d'engrènement avec un autre arbre de prélèvement de puissance.

Le prélèvement de puissance sur l'arbre BP permet de diminuer le prélèvement de puissance sur l'arbre HP et d'envisager une réduction du diamètre du corps HP, ce qui est bénéfique en termes de taux de dilution de la turbomachine.

Le manchon et l'arbre basse pression sont de préférence configurés pour que l'arbre de soufflante soit monté par engagement axial entre l'arbre basse pression et le manchon.

La présente invention concerne encore un procédé de démontage d'une turbomachine telle que décrite ci-dessus, caractérisé en ce qu'il comprend une étape de démontage des moyens de fixation du second support annulaire au carter intermédiaire, et une étape d'écartement axial dudit ensemble et du carter intermédiaire, du reste de la turbomachine

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique partielle en coupe longitudinale d'une turbomachine,
- la figure 2 est une demi vue schématique partielle en coupe longitudinale d'une turbomachine selon l'invention,
- la figure 3 est une demi vue très schématique d'un ensemble modulaire selon l'invention,
- la figure 4 est une demi vue schématique en perspective et en coupe axiale de l'ensemble modulaire de la figure 2,
- la figure 5 est une demi vue schématique en coupe longitudinale d'un ensemble modulaire selon une variante de réalisation de l'invention,
- la figure 6 est une demi vue schématique en coupe longitudinale d'un ensemble modulaire selon une autre variante de l'invention, et
- la figure 7 est une vue très schématique représentant une turbomachine selon l'invention, et
- la figure 8 est une vue correspondant à la figure 7 et dont l'ensemble selon l'invention est démonté du reste de la turbomachine.

### DESCRIPTION DETAILLEE

Dans les figures 2 à 4 qui représentent un premier mode de réalisation de l'invention, les éléments déjà décrits dans de qui précède en référence à la figure 1 sont désignés par les mêmes chiffres de référence.

La turbomachine de la figure 2 comprend classiquement d'amont en aval, dans le sens d'écoulement des gaz, une soufflante, un compresseur basse BP, un compresseur HP, une chambre de combustion, une turbine HP, une turbine BP et une tuyère d'éjection des gaz de combustion.

Les rotors du compresseur BP et de la turbine BP sont solidaires en rotation et liés entre eux au moyen de l'arbre BP 14 qui s'étend le long de l'axe longitudinal A de la turbomachine. Les rotors du compresseur HP et de la turbine HP sont solidaires en rotation et liés entre eux au moyen de l'arbre HP 12 qui s'étend le long de l'axe A. Les arbres 12, 14 sont tubulaires et engagés l'un à l'intérieur de l'autre, l'arbre HP 12 de plus grand diamètre s'étendant autour de l'arbre BP 14 de plus petit diamètre.

La soufflante comprend un rotor qui est relié à l'arbre 16 entraîné par l'arbre BP 14. L'arbre de soufflante 16 comprend une partie d'extrémité aval qui entoure une partie d'extrémité amont de l'arbre BP et qui est rendue solidaire en rotation de cet arbre par un jeu de cannelures 32.

Chaque palier 24, 30 de la turbomachine comprend une bague interne et une bague externe qui définissent entre elles un chemin de roulement de billes ou rouleaux. La bague interne de chaque palier est montée sur un arbre et sa bague externe est fixée à un support de palier 34, 26 de forme annulaire, qui est lui-même fixé à un stator de la turbomachine. Le palier 30 est un palier de butée à billes et le palier 24 est un palier à rouleaux. Le support de palier 26 est plan et a une orientation sensiblement radiale par rapport à l'axe A, qui est un axe de révolution du support 26.

La bague externe du palier 24 est ici fixée par une série de vis axiales 36a fusibles à la périphérie interne du support de palier 26 dont la périphérie externe est fixée par une autre série de vis axiales 36b fusibles au stator 31 de la turbomachine. Les vis fusibles 36a, 36b forment des moyens de découplage, respectivement radial et axial. Chaque moyen de découplage est destiné à se rompre lorsqu'il est soumis à des efforts supérieurs à un seuil prédéterminé. C'est par exemple le cas lors d'un événement de rupture et de perte d'une aube de soufflante.

La turbomachine est équipée de deux arbres de renvoi dont un seul est visible en figure 2. L'arbre de renvoi non visible s'étend sensiblement radialement par rapport à l'axe A, et est utilisé pour prélever de la puissance sur l'arbre HP afin d'entraîner un équipement de la turbomachine, tel qu'un AGB. Cet arbre de renvoi s'étend à l'intérieur d'un bras tubulaire d'un carter intermédiaire de la turbomachine, disposé entre les compresseurs BP et HP. L'extrémité radialement externe de l'arbre de renvoi peut être située dans une nacelle de la turbomachine, qui entoure le moteur et sert de compartiment de montage de plusieurs équipements dont l'AGB.

L'extrémité radialement interne de l'arbre de renvoi est équipée d'un pignon conique 20 qui est engrené avec la roue conique de renvoi 10. La roue de renvoi 10 est solidaire en rotation de l'arbre HP 12.

L'autre arbre de renvoi 18 s'étend sensiblement radialement par rapport à l'axe A et est utilisé pour prélever de la puissance sur l'arbre BP afin d'entraîner un autre équipement de la turbomachine, tel qu'un générateur électrique. Cet arbre de renvoi 18 s'étend à l'intérieur d'un autre bras creux du carter intermédiaire, qui est de préférence diamétralement opposé à celui traversé par le premier arbre de renvoi. L'extrémité radialement externe de l'arbre de renvoi peut également être située dans la nacelle et son extrémité radialement interne est équipée du pignon conique 20 qui est engrené avec la roue conique de renvoi 22.

Plus précisément, le pignon 20 comprend une portion cylindrique ou tubulaire 29 qui est montée sur l'extrémité radialement interne de l'arbre de renvoi 18 et qui est guidée et centrée en rotation autour d'un axe B sensiblement radial par deux paliers à roulement 31.

Les paliers à roulement 31 sont coaxiaux, de même diamètre et disposés à proximité l'un de l'autre. Un premier 31a des paliers 31, situé radialement à l'extérieur par rapport au second, est ici à billes. Le second 31b est à rouleaux dans l'exemple représenté.

Les bagues internes des paliers 31a, 31b sont solidaires en rotation de la portion 29 du pignon et ses bagues externes sont portées par un boîtier 35 de prélèvement de puissance, qui sert de support aux paliers 31 et au pignon 20 mais aussi de liaison au support de palier 26.

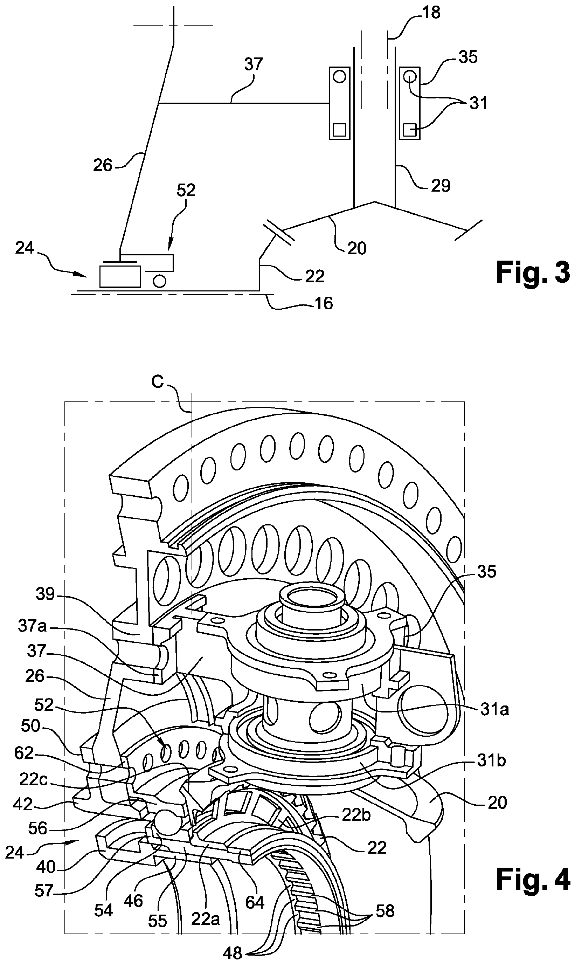

En effet, ce boîtier 35 assure d'une part le maintien et la retenue des paliers 31 mais aussi leur liaison au support de palier 26, comme cela est schématiquement représenté en figure 3. Pour cela, le boîtier 35 comprend au moins une patte 37 de liaison au support de palier 26, qui est visible en figure 4. Cette patte 37 s'étend sensiblement axialement vers l'amont et comprend à son extrémité amont une bride 37a de fixation au support de palier 26, par exemple par des moyens du type vis-écrou.

Le support de palier 26 comprend sur une circonférence s'étendant sensiblement à mi-distance de ces extrémités radialement interne et externe, un bossage 39 sur lequel est appliquée et fixée la bride 37a. Ce bossage 39 s'étend vers l'aval et comprend une face aval sensiblement radiale d'appui de la bride 37a.

La roue de renvoi 22 est solidaire en rotation de l'arbre BP 14. Elle est montée sur l'arbre de soufflante 16 qui est lui-même monté sur l'arbre BP 14. Comme cela est visible aux figures 2 et 4, la roue 22 est montée sur l'arbre de soufflante 16 par l'intermédiaire d'une partie tournante d'un système de transmission 38, qui est montée par engagement axial sur l'arbre de soufflante 16, le système de transmission comportant une partie fixe reliée, dans l'exemple représenté, au support de palier 26 de façon à ce que le système de transmission 38 soit retenu par ce support de palier lors d'un démontage de l'arbre de soufflante.

Dans les figures 2 et 4, les références 40 et 42 désignent respectivement les bagues interne et externe du palier 24. La bague interne 40 est montée sur l'extrémité aval de l'arbre de soufflante 16 et est serrée axialement contre un épaulement annulaire de cet arbre au moyen d'un écrou 44 qui est vissé depuis l'aval sur l'extrémité aval de l'arbre 16 et prend appui axialement sur la bague 40. La bague 40 comprend un prolongement cylindrique 46 vers l'aval qui s'étend au-dessus de l'écrou 44 et qui comprend des cannelures rectilignes externes 48. Comme on le voit en figure 3, le prolongement 46 de la bague 40 définit un espace annulaire dans lequel est engagée au moins une partie de l'écrou 44.

La bague externe 42 du palier 24 est reliée à une bride annulaire externe 50 qui est appliquée sur une face radiale amont d'une bride annulaire interne du support de palier 26 et qui est fixée à cette bride par les vis fusibles 36a.

Le système de transmission 38 comprend un palier à roulement 52 ici à billes dont la bague externe 56 est fixée au support de palier 26 et dont la bague interne 54 est montée sur un manchon 55 qui est lui-même monté sur le prolongement 46 de la bague 40.

Le manchon 55 comprend des cannelures rectilignes internes 58 qui sont complémentaires des cannelures 48, et est monté sur le prolongement 46 par translation axiale depuis l'aval. Le manchon 55 s'étend au-delà de l'extrémité aval du prolongement 46 de la bague 40.

La bague interne 54 est en appui axial vers l'amont sur un rebord annulaire externe 57 situé à l'extrémité amont du manchon 55.

La bague externe 56 est reliée à une bride annulaire externe 62 qui est appliquée sur une face radiale aval de la bride annulaire interne du support de palier 26. La bride du support de palier 26 est ainsi serrée entre les brides 50, 62 et fixée à ces brides au moyen des vis fusibles 36a précitées.

La roue de renvoi 22 est montée sur le manchon 55 et est fixée au moyen d'un écrou 64 qui est vissé depuis l'aval sur l'extrémité aval du manchon 55 et qui prend appui axialement sur la roue 22 pour la maintenir serrée contre la bague interne 54 du palier 52, qui est elle-même sollicitée par cet écrou 64 contre le rebord annulaire 57 du manchon.

La roue 22 comprend essentiellement trois parties : une paroi radialement interne 22a sensiblement cylindrique, une paroi de support 22b sensiblement radiale, et une denture externe conique 22c.

La paroi 22a comprend des cannelures rectilignes internes 65 engagées dans des cannelures rectilignes externes de forme complémentaire du manchon 55. La paroi 22b s'étend radialement vers l'extérieur depuis l'extrémité amont de la paroi 22a.

Comme on le voit mieux dans la figure 4, la roue de renvoi 22 et en particulier sa paroi de support 22b s'étend dans un plan transversal C qui passe par le boîtier 35 et en particulier sa patte 37, ce qui permet notamment de réduire l'encombrement axial de l'ensemble modulaire selon l'invention.

Cet ensemble modulaire est délimité par des traits pointillés en figure 2 et comprend dans l'exemple représenté :
- le support de palier 26 dont la périphérie interne forme des moyens de liaison à un (premier) palier 24, ici à rouleaux,
- le pignon 20, les (second et troisième) paliers 31, et le boîtier 35 de support du pignon 20, de ses paliers 31, et de liaison au support de palier 26, qui comprend notamment la patte 37,
- le système de transmission formé notamment par la roue de renvoi 22, le (quatrième) palier 52, ici à billes, relié également à la périphérie interne du support de palier 26, et le manchon 55.

Avant son montage dans une turbomachine, l'ensemble modulaire selon l'invention peut être assemblé de la façon suivante.

Le palier 52 est monté axialement sur le manchon 55 par translation axiale depuis l'aval, jusqu'à ce que sa bague interne 54 prenne appui axialement vers l'amont sur le rebord amont 57 du manchon. La roue 22 est ensuite montée axialement sur le manchon 55 par translation axiale depuis l'aval, jusqu'à ce que ses cannelures 58 s'engagent dans les cannelures 48 du manchon et qu'il prenne appui par sa paroi 22a sur la bague interne 54 du palier 52. L'écrou 64 est ensuite vissé sur l'extrémité aval du manchon 55 pour serrer et immobiliser axialement la bague 54 et la roue 22. Le système de transmission 38 équipé de la roue 22 peut alors être fixé au support de palier 26, au moyen de la bride 62 reliée à la bague externe 56 de son palier 52. Il est envisageable de rapporter et de fixer la bride 50 de la bague externe 42 sur le support de palier 26, puis de fixer les brides 50, 62 entre elles et au support de palier 26 par les vis fusibles 36a précitées.

Le boîtier 35 de prélèvement de puissance, équipé du pignon 20 et des paliers à roulement 31, est ensuite disposé en aval du support de palier 26 de façon à ce que la bride 37a de sa patte 37 prenne appui sur le bossage 39 du support de palier 26, et que le pignon 20 engrène avec la denture de la roue 22. Des moyens du type vis-écrou de fixation de la bride 37a au bossage 39 sont alors utilisés pour immobiliser le boîtier 35 dans cette position. L'ensemble modulaire selon le premier mode de réalisation de l'invention est alors formé.

Le support de palier 26 peut alors être fixé par sa périphérie externe au stator 31 au moyen des vis 36b. L'arbre BP 14 est alors assemblé par translation axiale depuis l'aval jusqu'à ce que son extrémité amont soit située en amont du système de transmission 38. Comme on le voit en figure 2, cet ensemble ne gêne pas le montage et le démontage de l'arbre de soufflante 16, ce dernier pouvant être engagé axialement depuis l'amont dans l'espace annulaire délimité, d'une part, par l'arbre BP 14, et, d'autre part, par la bague externe 42 et le manchon 55. Avant cet engagement, l'arbre de soufflante 16 est équipé de la bague interne 40 et des rouleaux du palier 24 ainsi que de l'écrou 44 d'immobilisation axiale de la bague 40 (figure 2). L'arbre de soufflante 16 est engagé par translation axiale depuis l'amont jusqu'à ce que les cannelures 32 des arbres 14, 16 s'engagent les unes dans les autres, les rouleaux du palier 24 s'engagent dans la bague externe 42, et que les cannelures 48 du prolongement 46 de la bague interne 40 de ce palier s'engagent dans les cannelures 58 du manchon 55.

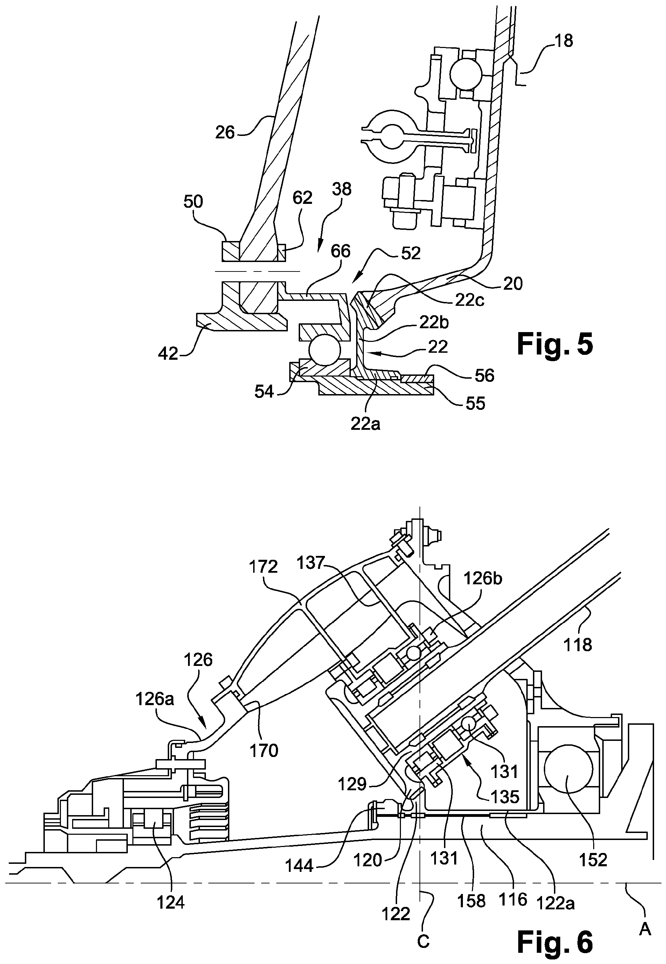

Dans la variante représentée en figure 5, la bague externe 56 du palier 52 est reliée à la bride externe 62 par une épingle 66 à section en C ou L, cette épingle étant configurée pour se déformer plastiquement en direction radiale, par écrasement radial local, lorsqu'elle est soumise à des efforts radiaux supérieurs à un certain seuil, correspondant par exemple au cas précité de perte d'une aube de soufflante.

La liaison glissante formée par les cannelures 48, 58 offre une liberté axiale totale et ne perturbe pas le fonctionnement du moyen de découplage axial formé par les vis fusibles 36b situées à la périphérie externe du support de palier 26. L'effet sur le moyen de découplage radial formé par les vis fusibles 36a situées à la périphérie interne du support de palier 26 est cependant plus problématique. Il faut pouvoir garantir que le chemin d'effort neutralisé grâce à ce découplage n'est pas remplacé par un autre passant par le palier 52. Ceci est évité grâce à l'épingle 66 qui peut amortir les efforts précités. Le palier 52 ne risque ainsi pas de transmettre ces efforts. L'épingle 66 pourrait être ajourée et comprendre une rangée annulaire d'orifices traversants, comme une cage d'écureuil.

Dans une autre variante non représentée, il serait possible d'intégrer plusieurs paliers au système de transmission 38. Ce système pourrait par exemple comprendre un doublet palier à billes et palier à rouleaux.

On se réfère maintenant à la figure 6 qui représente une autre variante de réalisation de l'invention et en particulier un autre exemple de réalisation de l'ensemble modulaire selon l'invention. Dans cette figure et dans ce qui suit, les éléments déjà décrits dans ce qui précède sont désignés par les mêmes chiffres de référence augmentés d'une centaine.

Le support de palier 126 a ici une forme générale biconique d'axe de révolution A et comprend deux parties tronconiques respectivement amont 126a et aval 126b. La partie 126a s'étend radialement vers l'extérieur d'amont en aval et est reliée par sa périphérie externe (ou extrémité aval) à la partie 126b qui s'étend radialement vers l'intérieur d'amont en aval.

La partie 126a comprend à sa périphérie interne des moyens de liaison à un palier à roulement 124, par exemple au moyen de brides annulaires de fixation. La partie 126b comprend à sa périphérie interne des moyens de liaison à un palier à roulement 152, par exemple au moyen de brides annulaires de fixation. Les paliers 124, 154 sont montés sur un arbre de soufflante 116.

Le boîtier 135 de prélèvement de puissance comprend au moins une patte 137 de liaison au support de palier 126, et en particulier à sa partie 126a. La partie 126 comprend une ouverture 170 traversant de montage du boîtier 135. La patte 137 du boîtier 135 comprend à son extrémité libre un couvercle 172 de fermeture de l'ouverture 170 et de fixation au support de palier 126.

Comme c'est le cas dans le premier mode de réalisation décrit ci-dessus, le boîtier 35 comprend des paliers à roulement 131 d'une portion cylindrique 129 d'un pignon 120 qui est engrené avec une roue de renvoi 122 entraînée par l'arbre de soufflante 116. L'arbre de renvoi 118 a son extrémité radialement interne engagée dans la portion cylindrique 129 et solidaire en rotation du pignon 120, par exemple au moyen de cannelures.

La roue de renvoi 122 est ici directement montée sur l'arbre de soufflante 116 et sa paroi cylindrique interne 122c est intercalée axialement entre la bague interne du palier 152 et un écrou 144 qui est vissé sur l'arbre 116.

La roue de renvoi 122 s'étend dans un plan transversal C qui ne passe par la patte 137 au contraire du premier mode de réalisation.

L'ensemble modulaire comprend dans l'exemple représenté en figure 6 :
- le support de palier 126 qui comprend des moyens de liaison à un (premier) palier 124, ici à rouleaux, et à un (quatrième) palier 152, ici à billes, et
- le pignon 120, les (second et troisième) paliers 131, et le boîtier 135 de support du pignon 120, des paliers 131, et de liaison au support de paliers 126, qui comprend notamment la patte 137.

Le palier 152 est monté axialement sur l'arbre de soufflante 116 depuis l'amont. La roue 22 est ensuite montée axialement sur l'arbre 116 par translation axiale depuis l'amont, jusqu'à ce que ses cannelures 158 s'engagent dans des cannelures complémentaires de l'arbre 116 et qu'il prenne appui par sa paroi 122a sur la bague interne du palier 152. L'écrou 144 est ensuite vissé sur l'arbre 116 pour serrer et immobiliser axialement la bague 152 et la roue 122.

Le support de palier 126 équipé du boîtier 135 et éventuellement du palier 124 peut ensuite être monté sur l'arbre 116 par translation axiale depuis l'amont, jusqu'à ce que le pignon 120 s'engrène avec la roue de renvoi 122. Le support de palier 126 est ensuite fixé par l'intermédiaire des brides. L'arbre de renvoi 118 peut alors être engagé en aveugle dans la portion 129 du pignon, à travers une ouverture prévue dans la partie 126b du support de palier 126.

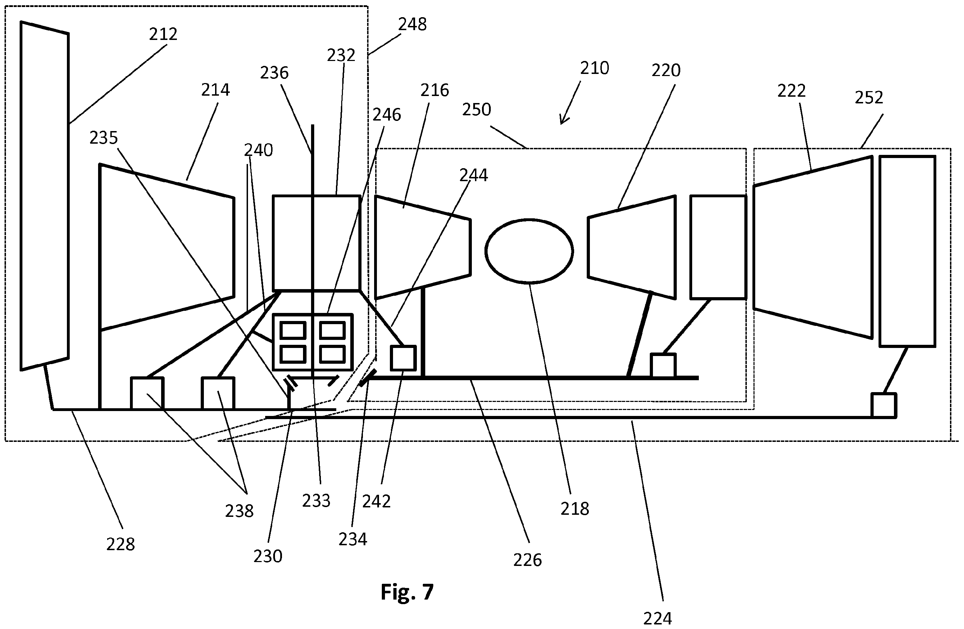

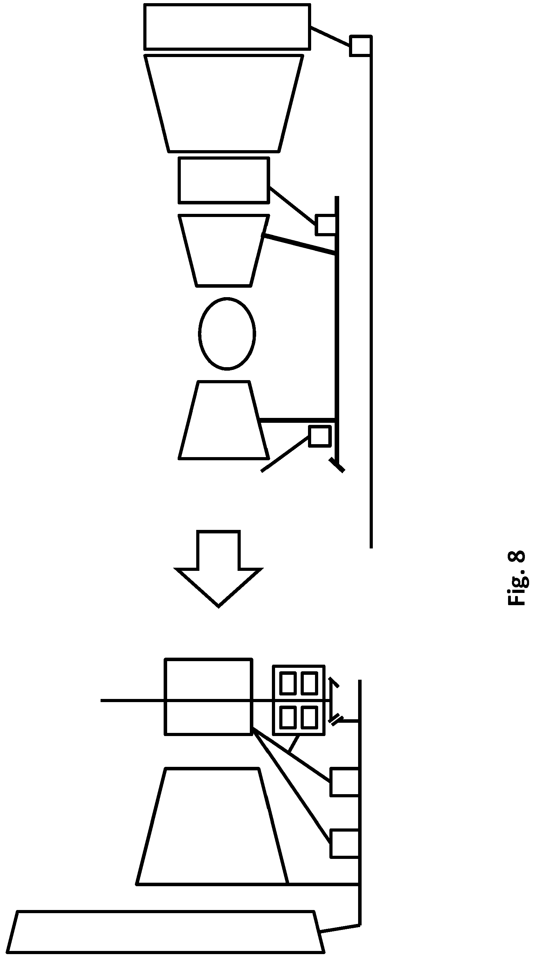

Les figures 7 et 8 représentent une turbomachine 210 selon l'invention. Comme dans le cas précité, la turbomachine 210 comprend une soufflante 212, un compresseur BP 214, un compresseur HP 216, une chambre de combustion 218, une turbine HP 220, une turbine BP 222 et une tuyère d'éjection des gaz de combustion.

Les rotors du compresseur BP 214 et de la turbine BP 222 sont solidaires en rotation et liés entre eux au moyen de l'arbre BP 224 qui s'étend le long de l'axe longitudinal de la turbomachine. Les rotors du compresseur HP 216 et de la turbine HP 220 sont solidaires en rotation et liés entre eux au moyen de l'arbre HP 226 qui s'étend le long de l'axe A. Les arbres 224, 226 sont tubulaires et engagés l'un à l'intérieur de l'autre, l'arbre HP 226 de plus grand diamètre s'étendant autour de l'arbre BP 224 de plus petit diamètre.

La soufflante 212 comprend un rotor qui est relié à l'arbre de soufflante 228 entraîné par l'arbre BP 224. L'arbre de soufflante 228 comprend une partie d'extrémité aval qui entoure une partie d'extrémité amont de l'arbre BP et qui est rendue solidaire en rotation de cet arbre par un jeu de cannelures 230.

La turbomachine est équipée de deux arbres de renvoi ou de prélèvement dont un seul est visible aux figures 7 et 8. L'arbre de renvoi non visible s'étend sensiblement radialement par rapport à l'axe A, et est utilisé pour prélever de la puissance sur l'arbre HP 226 afin d'entraîner un équipement de la turbomachine, tel qu'un AGB. Cet arbre de renvoi s'étend à l'intérieur d'un bras tubulaire d'un carter intermédiaire 232 de la turbomachine, disposé entre les compresseurs BP et HP. L'extrémité radialement externe de l'arbre de renvoi peut être située dans une nacelle de la turbomachine, qui entoure le moteur et sert de compartiment de montage de plusieurs équipements dont l'AGB.

L'extrémité radialement interne de l'arbre de renvoi est équipée d'un pignon conique qui est engrené avec la roue conique de renvoi 234 solidaire en rotation de l'arbre HP 226.

L'autre arbre de renvoi 236 s'étend sensiblement radialement par rapport à l'axe A et est utilisé pour prélever de la puissance sur l'arbre BP 224 afin d'entraîner un autre équipement de la turbomachine, tel qu'un générateur électrique. Cet arbre de renvoi 236 s'étend à l'intérieur d'un autre bras creux du carter intermédiaire 232, qui est de préférence diamétralement opposé à celui traversé par le premier arbre de renvoi. L'extrémité radialement externe de l'arbre de renvoi peut également être située dans la nacelle et son extrémité radialement interne est équipée du pignon conique 233 qui est engrené avec la roue conique de renvoi 235 solidaire de l'arbre BP.

Les paliers 238 de guidage de l'arbre de soufflante sont portés par un support annulaire 240 qui est relié au carter intermédiaire 232, par exemple par des moyens de fixation, tels qu'une bride annulaire.

L'un des paliers 242 de guidage de l'arbre HP est porté par un support annulaire 244 qui est relié au carter intermédiaire 232 par des moyens de fixation amovible, tels que par exemple une bride annulaire.

L'arbre de renvoi 236 est guidé en rotation par des paliers d'une boîte 246 de prélèvement de puissance, qui est ici relié au support annulaire 240 et dépourvu de liaison au support annulaire 244.

Comme on le comprend, le module majeur de soufflante 248 peut être démonté et retiré du module majeur BP 250 et du module majeur HP 252, par démontage des moyens de fixation du support annulaire 244 au carter intermédiaire 232 (figure 8). L'engrènement entre l'arbre de renvoi 236 et l'arbre BP 224 est maintenu en position démontée, et le boîtier de prélèvement 246 reste également connecté au support annulaire 240 en position démontée. Ceci permet notamment de faciliter la maintenance de l'ensemble, par rapport à l'engrènement entre l'arbre de renvoi et l'arbre HP.

## Revendications

1. Turbomachine (10) comprenant un ensemble modulaire, un arbre de soufflante (16, 116), et des paliers (24, 30, 124, 152) de guidage de l'arbre de soufflante, l'ensemble modulaire comportant un support annulaire de paliers (26, 34, 126), ledit support annulaire comprenant des moyens de liaison à au moins un premier palier à roulement (24, 30, 124) monté autour dudit arbre de soufflante (16, 116), **caractérisé en ce que** ledit support annulaire comprend des moyens de liaison à au moins un second palier à roulement (31, 131) configuré pour être monté autour d'un second arbre (18, 118) de la turbomachine non parallèle audit premier arbre, et **en ce que** ledit support annulaire comprend des moyens de liaison à un carter intermédiaire de la turbomachine.

2. Turbomachine (10) selon la revendication 1, dans laquelle ledit support de paliers (26, 126) comprend des moyens de liaison à un troisième palier à roulement (31, 131) configuré pour être monté autour dudit second arbre (18, 118) de la turbomachine.

3. Turbomachine (10) selon la revendication 1 ou 2, dans laquelle ledit support de paliers (26, 126) comprend des moyens de liaison à un quatrième palier à roulement (52, 152) configuré pour être monté autour dudit premier arbre (16, 116).

4. Turbomachine (10) selon la revendication 3, dans laquelle lesdits premier et quatrième paliers (24, 52) sont reliés à une périphérie interne du support de palier (26).

5. Turbomachine (10) selon la revendication 3 ou 4, dans laquelle ledit quatrième palier (52) comporte une bague interne (54) montée autour d'un manchon (55) sensiblement cylindrique autour duquel est également montée une roue conique (22) de renvoi qui est configurée pour être engrenée avec un pignon conique (20) comportant une portion cylindrique entouré par ledit second palier, et éventuellement ledit troisième palier, et configurée pour être montée sur ou pour former une extrémité longitudinale dudit second arbre.

6. Turbomachine (10) selon la revendication 5, dans laquelle la roue conique (22) est serrée axialement contre ladite bague interne (54) au moyen d'un écrou (64) vissé sur ledit manchon (55).

7. Turbomachine (10) selon la revendication 5 ou 6, dans laquelle ledit premier palier (24) comprend une bague interne (40) comportant un prolongement cylindrique (46) autour duquel est monté ledit manchon (55) qui comprend des cannelures internes (58) complémentaires de cannelures externes (48) dudit prolongement.

8. Turbomachine (10) selon l'une des revendications 5 à 7, dans laquelle ladite roue de renvoi (22) s'étend sensiblement dans un plan transversal (C) à un axe de révolution du support de paliers (26), qui est sensiblement parallèle audit support de paliers et/ou qui passe sensiblement par lesdits moyens (37) de liaison audit second palier (31).

9. Turbomachine (10, 210) selon l'une des revendications précédentes , dans laquelle elle comprend un moteur comprenant deux corps, respectivement basse pression (14) et haute pression (12), s'étendant le long de l'axe longitudinal de la turbomachine, le corps basse pression comportant un compresseur basse pression (214) et une turbine basse pression (222) dont les rotors sont reliés par un arbre basse pression (224) qui entraîne en rotation ledit arbre de soufflante (228), le corps haute pression comportant un compresseur haute pression (216) et une turbine haute pression (220) dont les rotors sont reliés à un arbre haute pression (226), la turbomachine comportant en outre, entre les compresseurs basse pression et haute pression, un carter intermédiaire (232) relié audit support annulaire (240), et dans laquelle le carter intermédiaire comprend des moyens de fixation amovible à un second support annulaire (244) de palier(s) de guidage dudit arbre haute pression.

10. Turbomachine (10) selon la revendication précédente, dans laquelle ledit second arbre est un arbre de prélèvement de puissance.

11. Turbomachine (10) selon la revendication précédente, dans laquelle ledit arbre haute pression comprend des moyens d'engrènement avec un autre arbre de prélèvement de puissance.

12. Procédé de démontage d'une turbomachine (10, 210) selon l'une des revendications 9 à 11, **caractérisé en ce qu'**il comprend une étape de démontage des moyens de fixation du second support annulaire au carter intermédiaire, et une étape d'écartement axial dudit ensemble et du carter intermédiaire, du reste de la turbomachine.

## Patentansprüche

1. Turbomaschine (10), umfassend eine modulare Einheit, eine Gebläsewelle (16, 116) und Führungslager (24, 30, 124, 152) der Gebläsewelle, wobei die modulare Einheit einen ringförmigen Lagerträger (26, 34, 126) aufweist, wobei der ringförmige Träger Verbindungsmittel zu mindestens einem ersten Wälzlager (24, 30, 124) aufweist, das um die Gebläsewelle (16, 116) angebracht ist, **dadurch gekennzeichnet, dass** der ringförmige Träger Verbindungsmittel zu mindestens einem zweiten Wälzlager (31, 131) umfasst, das ausgestaltet ist, um eine zweite, zu der ersten Welle nicht parallele Welle (18, 118) der Turbomaschine angebracht zu werden, und dadurch, dass der ringförmige Träger Verbindungsmittel zu einem Zwischengehäuse der Turbomaschine umfasst.

2. Turbomaschine (10) nach Anspruch 1, wobei der Lagerträger (26, 126) Verbindungsmittel zu einem dritten Wälzlager (31, 131) umfasst, das ausgestaltet ist, um die zweite Welle (18, 118) der Turbomaschine angebracht zu werden.

3. Turbomaschine (10) nach Anspruch 1 oder 2, wobei der Lagerträger (26, 126) Verbindungsmittel zu einem vierten Wälzlager (52, 152) umfasst, das ausgestaltet ist, um die erste Welle (16, 116) angebracht zu werden.

4. Turbomaschine (10) nach Anspruch 3, wobei die ersten und vierten Lager (24, 52) mit einem Innenrand des Lagerträgers (26) verbunden sind.

5. Turbomaschine (10) nach Anspruch 3 oder 4, wobei das vierte Lager (52) einen Innenring (54) aufweist, der um eine im Wesentlichen zylindrische Muffe (55) angebracht ist, um die ebenfalls ein Umlenkkegelrad (22) angebracht ist, das ausgestaltet ist, in ein Kegelritzel (20) mit einem zylindrischen Abschnitt einzugreifen, das von dem zweiten Lager umgeben ist, und eventuell dem dritten Lager, und ausgestaltet, auf einem Längsende der zweiten Welle angebracht zu werden oder dieses zu bilden.

6. Turbomaschine (10) nach Anspruch 5, wobei das Kegelrad (22) axial gegen den Innenring (54) mittels einer Mutter (64) gehalten wird, die auf die Muffe (55) geschraubt ist.

7. Turbomaschine (10) nach Anspruch 5 oder 6, wobei das erste Lager (24) einen Innenring (40) mit einer zylindrischen Verlängerung (46) umfasst, um die die Muffe (55) angebracht ist, die Innenrillen (58) umfasst, die komplementär sind zu Außenrillen (48) der Verlängerung.

8. Turbomaschine (10) nach einem der Ansprüche 5 bis 7, wobei sich das Umlenkrad (22) im Wesentlichen in einer Ebene quer (C) zu einer Drehachse des Lagerträgers (26) erstreckt, die im Wesentlichen parallel zu dem Lagerträger ist und/oder die im Wesentlichen durch die Verbindungsmittel (37) zu dem zweiten Lager (31) verläuft.

9. Turbomaschine (10, 210) nach einem der vorstehenden Ansprüche, wobei sie einen Motor umfasst, der zwei Körper, jeweils Niederdruck (14) und Hochdruck (12), umfasst, die sich entlang der Längsachse der Turbomaschine erstrecken, wobei der Niederdruckkörper einen Niederdruckverdichter (214) und eine Niederdruckturbine (222) aufweist, deren Rotoren durch eine Niederdruckwelle (224) verbunden sind, die die Gebläsewelle (228) in Drehung versetzt, wobei der Hochdruckkörper einen Hochdruckverdichter (216) und eine Hochdruckturbine (220) aufweist, deren Rotoren durch eine Hochdruckwelle (226) verbunden sind, wobei die Turbomaschine weiter, zwischen dem Niederdruck- und dem Hochdruckverdichter, ein Zwischengehäuse (232) aufweist, das mit dem ringförmigen Träger (240) verbunden ist, und wobei das Zwischengehäuse Mittel zur lösbaren Befestigung an einem zweiten ringförmigen Träger (244) von Führungslager(n) der Hochdruckwelle umfasst.

10. Turbomaschine (10) nach dem vorstehenden Anspruch, wobei die zweite Welle eine Leistungsentnahmewelle ist.

11. Turbomaschine (10) nach dem vorstehenden Anspruch, wobei die Hochdruckwelle Mittel zur Verzahnung mit einer anderen Leistungsentnahmewelle umfasst.

12. Verfahren für den Abbau einer Turbomaschine (10, 210) nach einem der Ansprüche 9 bis 11, **dadurch gekennzeichnet, dass** es einen Schritt des Abbauens der Mittel zur Befestigung des zweiten ringförmigen Trägers an dem Zwischengehäuse und einen Schritt des axialen Beabstandens der Einheit und des Zwischengehäuses von dem Rest der Turbomaschine umfasst.

## Claims

1. Turbine engine (10) comprising a modular assembly, a fan shaft (16, 116), and bearings (24, 30, 124, 152) for guiding the fan shaft, the modular assembly having an annular bearing support (26, 34, 126), said annular support comprising means for connection to at least a first anti-friction bearing (24, 30, 124) fitted around said fan shaft (16, 116), **characterised in that** said annular support comprises means for connection to at least a second anti-friction bearing (31, 131) configured to be fitted around a second shaft (18, 118) of the turbine engine not parallel to said first shaft, and **in that** said annular support comprises means for connection to an intermediate casing of the turbine engine.

2. Turbine engine (10) according to claim 1, wherein said bearing support (26, 126) comprises means for connection to a third anti-friction bearing (31, 131) configured to be fitted around said second shaft (18, 118) of the turbine engine.

3. Turbine engine (10) according to claim 1 or claim 2, wherein said bearing support (26, 126) comprises means for connection to a fourth anti-friction bearing (52, 152) configured to be fitted around said first shaft (16, 116).

4. Turbine engine (10) according to claim 3, wherein said first and fourth bearings (24, 52) are connected to an inner periphery of the bearing support (26).

5. Turbine engine (10) according to claim 3 or claim 4, wherein said fourth bearing (52) has an inner ring (54) fitted around a substantially cylindrical sleeve (55) around which there is also fitted a countershaft bevel gear (22) that is configured to be in mesh with a bevel pinion (20) having a cylindrical portion surrounded by said second bearing, and possibly said third bearing, and configured to be fitted to, or to form, a longitudinal extremity of said second shaft.

6. Turbine engine (10) according to claim 5, wherein the bevel gear (22) is gripped axially against said inner ring (54) by means of a nut (64) screwed on said sleeve (55).

7. Turbine engine (10) according to claim 5 or claim 6, wherein said first bearing (24) comprises an inner ring (40) with a cylindrical extension (46) around which is fitted said sleeve (55) which comprises internal splines (58) complementary to external splines (48) of said extension.

8. Turbine engine (10) according to any of claims 5 to 7, wherein said countershaft gear (22) extends substantially within a plane (C) transverse to an axis of revolution of the bearing support (26), which is substantially parallel to said bearing support and/or which passes substantially through said means (37) for connection to said second bearing (31).

9. Turbine engine (10, 210) according to any of the preceding claims, wherein it comprises an engine comprising two bodies, a low-pressure body (14) and a high-pressure body (12) respectively, extending along the longitudinal axis of the turbine engine, the low-pressure body having a low-pressure compressor (214) and a low-pressure turbine (222), the rotors of which are connected by a low-pressure shaft (224) that drives said fan shaft (228) in rotation, the high-pressure body having a high-pressure compressor (216) and a high-pressure turbine (220), the rotors of which are connected to a high-pressure shaft (226), the turbine engine also having, between the low-pressure and high-pressure compressors, an intermediate casing (232) connected to said annular support (240), and wherein the intermediate casing comprises detachable means for fixing to a second annular guide bearing(s) support (244) of said high-pressure shaft.

10. Turbine engine (10) according to the preceding claim, wherein said second shaft is a power take-off shaft.

11. Turbine engine (10) according to the preceding claim, wherein said high-pressure shaft comprises means for meshing with another power take-off shaft.

12. Method for disassembling a turbine engine (10, 210) according to any of claims 9 to 11, **characterised in that** it comprises a step of disassembling the means for fixing the second annular support to the intermediate casing, and a step of axial distancing of said assembly and the intermediate casing from the rest of the turbine engine.
